# FASCICULE DE BREVET EUROPEEN

(11) **EP 0 581 700 B1**
(45) Date de publication et mention de la délivrance du brevet: **23.09.1998**
(21) Numéro de dépôt: 93420319.1
(22) Date de dépôt: 27.07.1993
(51) Int. Cl.: G11B 27/32, G11B 15/12

(54) **Dispositif de commutation écriture/lecture d'une tête de magnétoscope**
Aufzeichnungs-/Wiedergabeschalteinrichtung für einen Videokopf
Recording/reproducing switching device for a video head

(30) Priorité: 31.07.1992 FR 9209799
(43) Date de publication de la demande: 02.02.1994
(73) Titulaire: SGS-THOMSON MICROELECTRONICS S.A., 94250 Gentilly (FR)
(72) Inventeur: Jaffard, Jean-Luc, F-381200 Saint Egreve (FR); Desprez-Le Goarant, Yann, F-38100 Grenoble (FR)
(74) Mandataire: de Beaumont, Michel

(56) Documents cités:
- EP-A- 0 334 775
- EP-A- 0 484 256
- DE-A- 3 735 539
- GB-A- 2 179 192
- US-A- 4 703 311
- IEEE TRANSACTIONS ON CONSUMER ELECTRONICS vol. CE-33, no. 3 , Aoüt 1987 , NEW YORK US pages 220 - 224 NAOMICHI NISHIMOTO ET AL 'VHS VCR WITH INDEX AND ADDRESS SEARCH SYSTEMS'

## Description

La présente invention concerne les têtes de lecture de magnétoscopes, en particulier la tête de lecture dite de contrôle qui doit être commutée en mode lecture très rapidement après avoir effectué une écriture.

De nombreux magnétoscopes permettent un comptage en temps réel de la longueur de bande. Pour cela, lors de l'enregistrement d'un programme sur la bande, on enregistre également sur une piste de contrôle de cette bande, à l'aide d'une tête de contrôle, un signal rectangulaire d'une fréquence d'environ 25 Hz. Ainsi, lorsque la bande est relue, ce signal rectangulaire de contrôle permet un comptage en temps réel du défilement de la bande quelle que soit la vitesse de la bande (recherche rapide, ralenti, lecture normale...). En outre, certains modèles de magnétoscope permettent d'utiliser le signal de contrôle pour enregistrer en même temps des repères aussi appelés index. Un index permet, par exemple, d'atteindre en recherche rapide le début d'une séquence marquée de l'index.

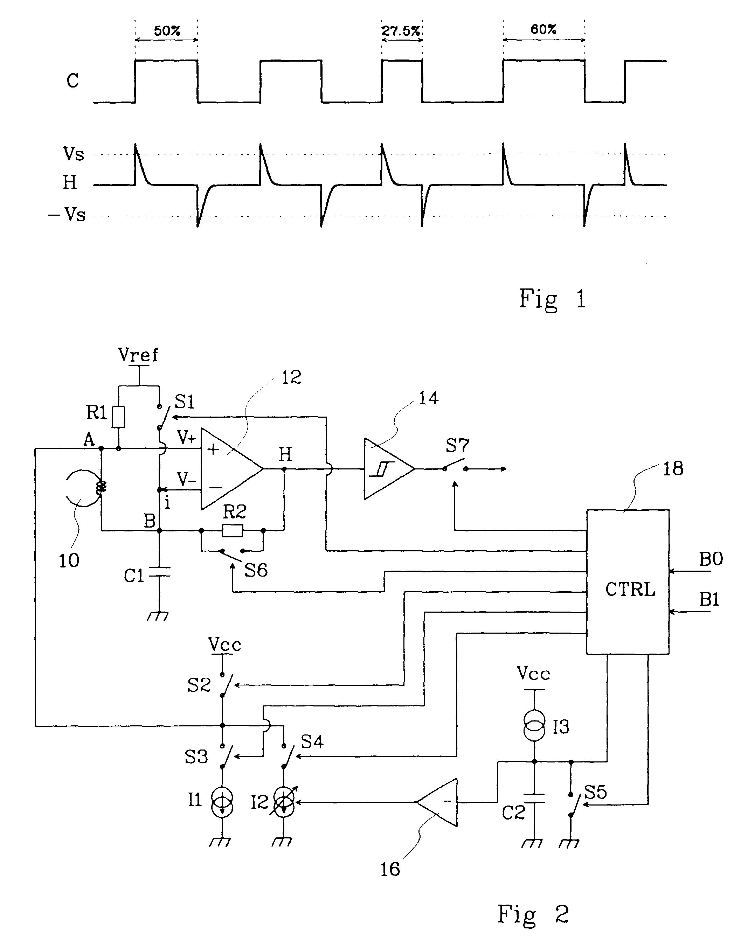

La figure 1 représente l'allure d'un exemple de signal rectangulaire de contrôle C enregistré sur une bande et l'allure H d'un signal fourni par la tête de lecture lisant le signal C.

Lors des deux premières périodes représentées du signal C, ce signal présente un rapport cyclique de 50 % correspondant à une situation où la bande n'est pas marquée d'un index. La troisième période représentée du signal C présente un rapport cyclique de 27,5 % et la quatrième période un rapport cyclique de 60 %. Ces rapports de 27,5 % et 60 %, normalisés, correspondent respectivement à des valeurs binaires 1 et 0. Ainsi, pour marquer la bande d'un index numérique de n bits, on enregistre une combinaison de rapports cycliques de 27,5 et 60 % sur n périodes successives du signal C.

La tête de contrôle se comporte en fait comme un dérivateur dérivant le signal de contrôle C. Ainsi, comme cela est représenté, le signal H délivré par la tête de contrôle présente une impulsion positive à chaque front montant du signal C et une impulsion négative à chaque front descendant du signal C. Les fronts montants du signal C sont espacés d'une période constante, ce qui permet, en détectant les impulsions positives du signal H (par le dépassement d'un seuil positif Vs) d'effectuer le comptage en temps réel du défilement de la bande. Ce sont les fronts descendants du signal C qui sont modulés dans le temps et correspondent aux rapports cycliques susmentionnés. Ainsi, en détectant les impulsions négatives du signal H (par le dépassement d'un seuil négatif -Vs) on peut vérifier si le signal de contrôle C comporte des données binaires 0, 1 ou non.

Le marquage d'un index sur la bande lorsque, par exemple, un utilisateur désire repérer une séquence sur la bande, s'effectue de la manière suivante. Un circuit de marquage détecte un front montant du signal C en mode lecture, passe en mode écriture, écrit une valeur haute pendant l'intervale de temps nécessaire (27,5 % ou 60 % de la période) puis écrit une valeur basse au moins jusqu'à 60 % de la période. Ensuite, ce dispositif doit rapidement repasser en mode lecture pour lire le prochain front montant du signal C. La transition du mode écriture au mode lecture pose certains problèmes de démagnétisation de la tête de lecture et de stabilisation du circuit d'amplification de lecture afin de ne pas inscrire des impulsions parasites sur la bande et de détecter correctement le prochain front montant du signal de contrôle. Ces problèmes seront décrits plus en détail en relation avec la figure 2.

La figure 2 représente schématiquement un circuit classique d'exploitation d'une tête de lecture de contrôle 10. Une borne A de la tête de lecture 10 est reliée à l'entrée non inverseuse V+ d'un amplificateur différentiel de grand gain 12 et l'autre borne B de la tête 10 est reliée à l'entrée inverseuse V- de l'amplificateur 12. L'entrée V+ de l'amplificateur 12 est polarisée par une résistance R1 reliée à une tension de référence Vref approximativement égale à la moitié de la tension d'alimentation VCC du circuit représenté. L'entrée V- de l'amplificateur 12 est par ailleurs reliée à la masse à travers une capacité C1 et à la sortie H de l'amplificateur 12 à travers une résistance R2. Cette disposition particulière de l'amplificateur 12 permet d'obtenir une régulation de la tension de repos en sortie de l'amplificateur à une valeur d'environ Vref, quelle que soit la tension de décalage parasite en entrée de l'amplificateur. La constante de temps R2xC1 est choisie élevée pour obtenir aux bornes de la capacité C1 une tension sensiblement constante égale à la tension moyenne H de sortie de l'amplificateur 12.

La sortie H de l'amplificateur 12 est reliée à un comparateur 14 à hystérésis ayant des valeurs seuil haute Vs et basse -Vs, indiquées à la figure 1. Ce comparateur 14 sert à détecter les impulsions positives et négatives de la tension H. Si on ne régulait pas la tension de repos de l'amplificateur 12, celle-ci pourrait varier avec la tension de décalage qui varie elle même fortement en fonction de la température. Il pourrait alors arriver que le comparateur 14 ne détecte plus les impulsions positives ou les impulsions négatives du signal H. La sortie du comparateur 14 est utilisée par des circuits non représentés pour le comptage en temps réel du défilement de la bande et pour la détection d'index.

La borne B de la tête de lecture 10 peut être reliée à la tension Vref par un interrupteur S1. La borne A peut être reliée à la tension VCC par un interrupteur S2 ou à la masse à travers un interrupteur S3 et une source de courant I1. En outre, la borne A peut être reliée à la masse par le montage en série d'un interrupteur S4 et d'une source de courant réglable I2. La source de courant réglable I2 est pilotée par un amplificateur inverseur 16 dont l'entrée est reliée à la tension VCC par une source de courant I3 et à la masse par une capacité C2. La capacité C2 peut être court-circuitée par un interrupteur S5.

La résistance R2 peut être court-circuitée par un interrupteur S6.

La sortie du comparateur 14 peut être mise à haute impédance par un interrupteur S7.

Les interrupteurs S1 à S7 sont pilotés par un circuit de commande (CTRL) 18 d'une manière décrite ci-après pour mettre la tête en mode lecture ou écriture et dans ce dernier cas inscrire sur la bande une valeur binaire 0 lors de l'activation d'un signal B0 ou une valeur binaire 1 lors de l'activation d'un signal B1. Le séquencement des interrupteurs S1 à S7 est déterminé par le circuit de commande 18 en fonction de la tension aux bornes de la capacité C2 qui constitue avec la source I3 et l'interrupteur S5 un générateur de rampe de tension.

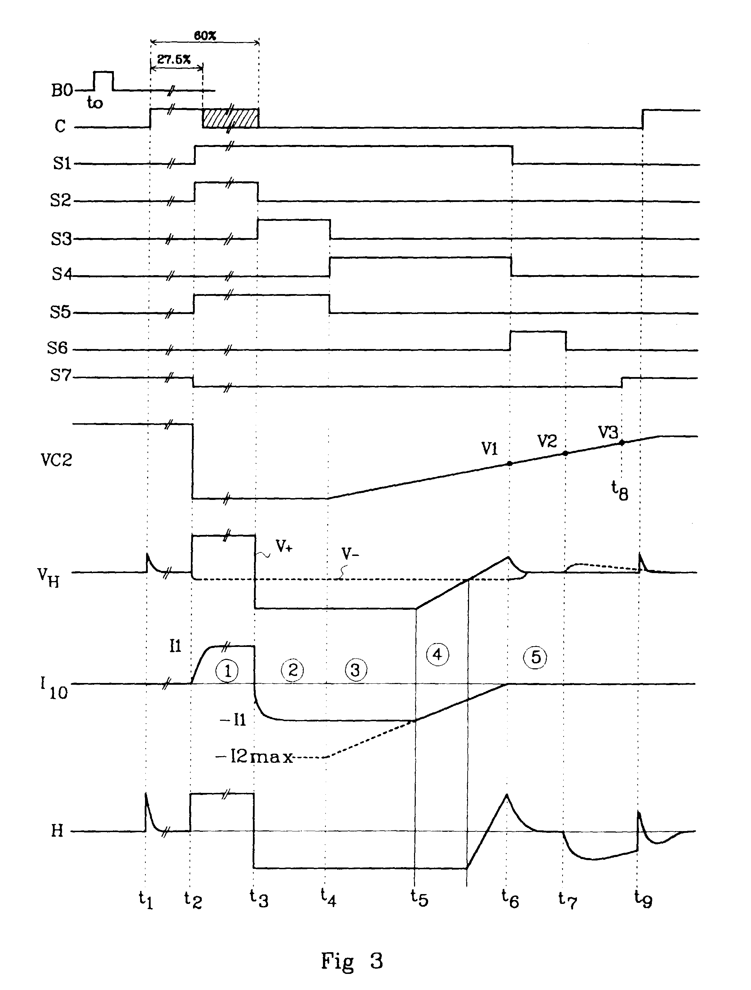

La figure 3 représente l'allure de divers signaux entrant en jeu dans le circuit de la figure 2 lorsque l'on veut écrire une valeur binaire sur la bande. L'exemple illustré correspond à l'écriture d'un créneau de rapport cyclique de 60 %, c'est-à-dire à l'écriture d'une valeur binaire 0.

La courbe B0 représente l'allure du signal B0 d'ordre d'écriture de valeur 0. La courbe C représente l'allure du signal de contrôle enregistré sur la bande. Les courbes S1 à S7 représentent respectivement les signaux de commande appliqués aux interrupteurs S1 à S7, l'état haut d'un de ces signaux correspondant à un interrupteur fermé. La courbe VC2 représente la tension aux bornes de la capacité de génération de rampe C2. La courbe VH représente en trait plein la tension V+ de l'entrée non inverseuse de l'amplificateur 12 (ou de la borne A), et en pointillés la tension V- de l'entrée inverseuse de l'amplificateur 12 (ou de la borne B). La tension V- représente aussi la tension aux bornes de la capacité C1. La courbe I₁₀ représente le courant dans la tête 10. Finalement, la courbe H représente la tension de sortie de l'amplificateur 12.

L'intervalle de temps où le signal C est à l'état haut (27,5 ou 60 % de la période du signal C) a été représenté à une échelle comprimée pour mieux faire apparaître les événements importants se produisant dans le dernier intervalle de 40 % de la période du signal C.

A un instant t0 arrive un ordre d'écriture d'une valeur 0 sur la bande sous la forme d'une impulsion B0. Le circuit de contrôle est en mode lecture (les signaux S1 à S6 sont à bas niveau et le signal S7 est à haut niveau) et le reste jusqu'au prochain front montant du signal de contrôle C, à un instant t1.

A un instant t2 antérieur à la survenue possible d'un front descendant du signal de contrôle C (27,5 % de la période du signal C après l'instant t1 pour une valeur binaire 1 enregistrée), on entre en mode écriture de la bande. En même temps, l'interrupteur S7 est ouvert pour que les variations de la sortie H de l'amplificateur 12 ne soient pas prises en compte au cours de ce mode écriture et d'un mode de transition ultérieur. Le mode écriture comprend deux phases numérotées 1 et 2 au niveau de la courbe I₁₀.

La phase 1 consiste à faire circuler un courant positif dans la tête 10 pour écrire un niveau haut sur la bande. Pour cela, l'interrupteur S1 est fermé pour relier la borne B de la tête 10 à la tension Vref et l'interrupteur S2 est fermé pour relier la borne A de la tête 10 à la tension VCC. Ainsi, on applique une tension de VCC-Vref aux bornes de la tête 10. L'interrupteur S1 est fermé pour maintenir constante la tension aux bornes de la capacité C1 afin que cette tension ne soit pas affectée par les variations à venir de la tension de sortie H de l'amplificateur 12. Avant la fermeture de l'interrupteur S1, la tension V- aux bornes de la capacité était, comme le représente la courbe VH, légèrement supérieure à la tension Vref. La tension appliquée sur la tête 10 durant cette phase entraîne un courant positif dans la tête qui inscrit une valeur haute du signal de contrôle sur la bande. La phase 1 dure jusqu'à un instant t3 survenant, dans cet exemple, à 60 % de la période du signal C. Lors de l'écriture d'une valeur binaire 1 sur la bande, ce qui n'est pas représenté, l'instant t3 survient à 27,5 % de la période du signal C.

A l'instant t3 on entre dans la phase 2 du mode écriture. Cette phase consiste à inscrire un front descendant du signal de contrôle C. Dans tous les cas (écriture d'une valeur binaire 0 ou 1 sur la bande), la phase 2 se prolonge légèrement au delà de 60 % de la période du signal C, par exemple jusqu'à 61 %. Lors de l'écriture d'une valeur binaire 1, ce qui n'est pas représenté, cette phase dure de 27,5 % à 60 % de la période du signal C afin d'effacer une possible valeur binaire 0 enregistrée auparavant. L'interrupteur S2 est ouvert et l'interrupteur S3 est fermé. L'interrupteur S3 relie la borne A de la tête 10 à la masse par l'intermédiaire de la source de courant I1. Ainsi, on impose un courant négatif dans la tête 10 qui inscrit une valeur basse sur la bande. La tension V+ chute à une valeur basse correspondant à la circulation du courant négatif dans la tête.

A un instant t4, le mode écriture se termine et un mode de transition commence pour passer rapidement au mode lecture avant l'arrivée du prochain front montant du signal C. Le mode de transition comprend trois phases successives numérotées 3 à 5 au niveau de la courbe I₁₀. La phase 3 est en fait une phase de latence non souhaitée. Après le mode écriture, il faut ramener le courant présent dans la composante inductive de la tête 10 à une valeur nulle de manière suffisamment lente pour ne pas créer de surtension et l'écriture d'une impulsion parasite sur la bande. On tente pour cela d'imposer à la tête 10 une rampe de courant décroissant en valeur absolue. A l'instant t4, on ouvre l'interrupteur S5 en permettant la charge de la capacité C2 par la source de courant I3. La tension VC2 aux bornes de la capacité C2 se met à croître linéairement. A l'instant t4, on ouvre aussi l'interrupteur S3 et on ferme l'interrupteur S4 reliant la source de courant commandée I2 à la borne A de la tête 10. La source I2 étant pilotée négativement par la tension VC2, son courant I2 décroît en valeur absolue en fonction de la tension VC2. Le courant I2 décroît à partir d'une valeur maximale théorique I2max choisie aussi proche que possible de la valeur I1 du courant présent dans la tête 10 à la fin de la phase 2. Cette valeur I2max doit toutefois être choisie supérieure à I1 de façon à éviter, par des dispersions de fabrication et des variations de température, que ce courant I2max devienne inférieur à I1, ce qui entraînerait un échelon de courant dans la tête et l'écriture d'une impulsion parasite sur la bande. Ainsi, à l'instant t4 et jusqu'à ce que le courant I2 atteigne la valeur I1, la source I2 est saturée, c'est-à-dire que la tête I0 consomme un courant inférieur à celui que tend à fournir la source I2. Etant donné que la pente du courant I2 est faible, la phase 3 dure longtemps.

A un instant t5, le courant de la source I2 atteint la valeur I1 et on entre dans la phase 4 de décharge effective du courant accumulé dans la tête 10.

A un instant t6, le courant dans la tête 10 s'annule. Cet instant est approximativement détecté lorsque la tension VC2 atteint une valeur seuil V1 adéquatement choisie. A l'instant t6, on se trouve dans une situation où la tension V+ est au dessus de sa valeur initiale et la tension V-, tension aux bornes de la capacité C1, est en dessous de sa valeur initiale. On entre dans la phase 5 qui a pour but de ramener les tensions d'entrée V+, V- de l'amplificateur 12 aux valeurs initiales le plus rapidement possible. Les interrupteurs S1 et S4 sont ouverts. L'amplificateur 12 retrouve ainsi sa configuration à régulation de tension de repos. De plus, on ferme l'interrupteur S6 qui court-circuite la résistanoe R2. Ceci entraîne que l'état d'équilibre de l'amplificateur 12 est atteint très rapidement grâce à la charge rapide de la capacité C1. Comme cela est représenté, les tensions V+ et V- rejoignent rapidement leurs valeurs initiales.

La phase 5 doit se prolonger suffisamment longtemps pour que l'on soit sûr que les tensions V+ et V- rejoignent leurs valeurs initiales avant la fin de cette phase. La phase 5 se termine à un instant t7 déterminé par le fait que la tension VC2 aux bornes de la capacité C2, toujours chargée par la source I3, atteint une valeur seuil V2 convenablement choisie. L'interrupteur S6 est ouvert et l'amplificateur 12 est ramené à sa configuration initiale de régulation lente de tension de repos. Le mode lecture pourrait être rétabli à l'instant t7. Il est en fait rétabli à un instant t8 ultérieur où l'interrupteur S7 est refermé pour valider la sortie du comparateur 14.

Toutefois, la brusque ouverture de l'interrupteur S6 entraîne qu'un courant de polarisation i de l'amplificateur 12 a le temps de charger la capacité C1 avant l'entrée en jeu de la régulation de tension de repos. Comme cela est représenté par la courbe VH, la tension V- croît légèrement, puis se met à décroître lentement grâce à la régulation de tension de repos.

Comme le représente la courbe H, la sortie de l'amplificateur 12 suit les évolutions de la différence de tension V+ - V-. Ces évolutions ne sont pas prises en compte entre l'instant t2 et l'instant t8 grâce au fait que l'interrupteur S7 reste ouvert entre ces instants. L'instant t8 est détecté par le fait que la tension VC2 aux bornes de la capacité C2 atteint une valeur seuil V3 légèrement inférieure à la valeur finale atteinte par la tension VC2 (approximativement VCC).

A un instant t9 survient le prochain front montant du signal C. Comme cela est représenté par la courbe H, la tension de sortie de l'amplificateur 12 se trouve à l'instant t9 encore en dessous de sa valeur de repos, à cause de la charge parasite de la capacité C2 par le courant i. Si à l'instant t9 la tension de sortie de l'amplificateur 12 est encore trop loin de la valeur de repos, il se peut que l'impulsion correspondant au front montant du signal C ne soit pas détectée par le comparateur 14. En pratique, on dispose de moins de 40 % de la période du signal C, environ 15 ms, pour stabiliser la sortie de l'amplificateur 12 à une valeur convenable (permettant de détecter le prochain front montant du signal C) après une écriture. Ces 15 millisecondes suffisent généralement.

Toutefois, les recommandations actuelles tendent à imposer que cette stabilisation s'effectue plus rapidement. Ceci devient difficile avec le circuit classique que l'on vient de décrire.

Un objet de la présente invention est de prévoir un circuit de commutation entre modes lecture et écriture d'une tête de lecture, capable d'une commutation particulièrement rapide du mode écriture vers le mode lecture.

La présente invention se base sur l'analyse détaillée ci-dessus d'un circuit classique et propose, d'une part, un dispositif d'accélération de la décroissance du courant de la source I2 pendant la phase 3 et, d'autre part, un dispositif de commutation douce en fin de phase 5.

La présente invention vise plus particulièrement un dispositif de commutation d'un mode écriture à un mode lecture d'une tête de lecture reliée entre des première et deuxième bornes d'entrée d'un amplificateur différentiel, la deuxième borne d'entrée étant reliée à un potentiel constant par l'intermédiaire d'une capacité et à la sortie de l'amplificateur par l'intermédiaire d'une résistance. Le dispositif de l'invention telle que définie dans la revendication 1 comprend : des moyens de génération d'une rampe de tension, actifs après une écriture ; des moyens de décharge du courant de la tête de lecture proportionnellement à ladite rampe entre le début de la rampe et un premier seuil de la rampe ; des moyens de commutation de ladite résistance à une valeur basse, au moins entre le premier seuil et un deuxième seuil de la rampe ; et des moyens de détection du deuxième seuil assurant, au voisinage de ce seuil, une commande progressive desdits moyens de commutation.

Selon un mode de réalisation de la présente invention, les moyens de commutation comprennent deux transistors de commutation de même type disposés en parallèle sur ladite résistance et en opposition l'un par rapport à l'autre.

Selon un mode de réalisation de la présente invention, les moyens de détection du deuxième seuil comprennent deux transistors montés en étage différentiel dont une entrée reçoit une tension égale au deuxième seuil et l'autre entrée reçoit ladite rampe, des moyens étant prévus pour fournir aux bases des transistors de commutation un courant proportionnel au courant circulant dans l'un ou l'autre des transistors de l'étage différentiel.

Selon un mode de réalisation de la présente invention, le dispositif comprend un miroir de courant disposé pour copier dans les bases des transistors de commutation le courant circulant dans l'un ou l'autre des transistors de l'étage différentiel.

Ces objets, caractéristiques et avantages ainsi que d'autres de la présente invention seront exposés en détail dans la description suivante de modes de réalisation particuliers faite en relation avec les figures jointes parmi lesquelles :
les figures 1 à 3, précédemment décrites, sont destinées à illustrer l'état de la technique ;
la figure 4 représente un mode de réalisation de circuit de commutation selon la présente invention ;
la figure 5 représente un mode de réalisation détaillé d'un élément du circuit de la figure 4 ; et
la figure 6 représente les allures de divers signaux du circuit de la figure 4 lors du passage du mode écriture au mode lecture.

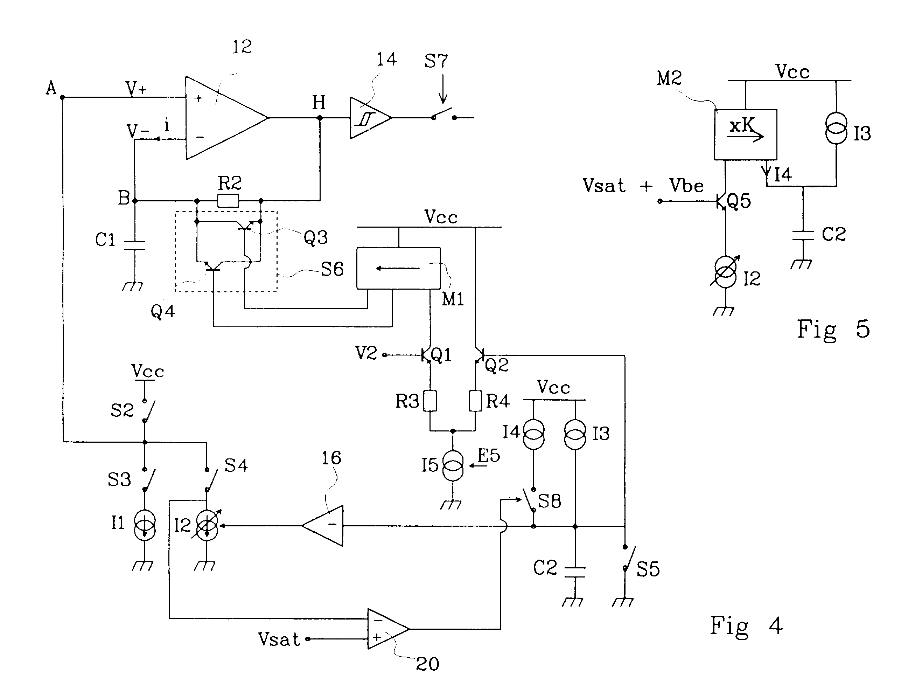

Dans la figure 4 on retrouve des mêmes éléments qu'à la figure 2, désignés par des mêmes références. Pour simplifier la figure, on n'a repris de la figure 2 que certains des éléments.

Selon l'invention, l'entrée inverseuse d'un comparateur 20 est reliée entre l'interrupteur S4 et la source de courant commandée I2. L'entrée non inverseuse du comparateur 20 est reliée à une tension Vsat sensiblement égale à la tension de saturation de la source I2. La sortie du comparateur 20 commande un interrupteur S8 disposé en série avec une source I4. La source I4 et l'interrupteur S8 sont disposés en parallèle sur la source I3 de charge de la capacité C2. Le courant délivré par la source I4 est important par rapport à celui délivré par la source I3.

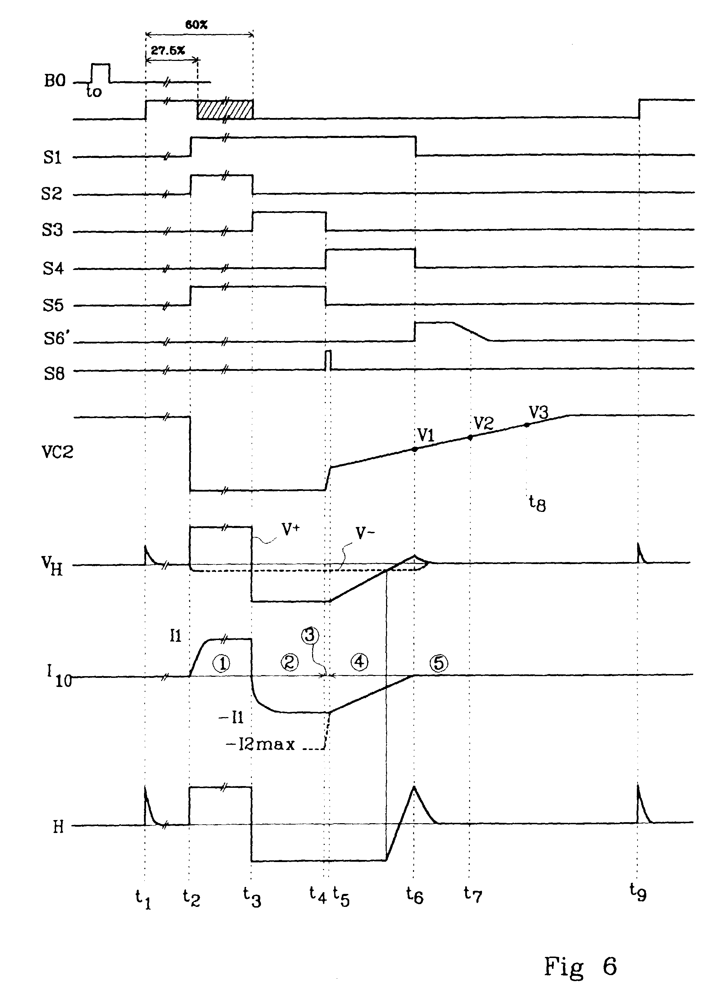

Ce circuit, comme cela sera décrit en relation avec la figure 6, permet de réduire la phase de latence 3 susmentionnée à une durée négligeable.

Selon un autre aspect de l'invention, un étage différentiel formé de deux transistors NPN Q1 et Q2, compare la tension aux bornes de la capacité C2 à une tension seuil V2 qui peut être identique à celle de la figure 6. Les transistors Q1 et Q2 sont reliés par des résistances d'émetteur R3 et R4 à une source de courant I5, elle-même reliée à la masse. La source I5 peut être activée ou désactivée par un signal E5. Les résistances R3 et R4 sont destinées à limiter et à linéariser le gain de l'étage différentiel. La base du transistor Q1 reçoit la tension seuil V2 et la base du transistor Q2 reçoit la tension VC2 aux bornes de la capacité C2. Le collecteur du transistor Q2 est relié à la tension VCC et le collecteur du transistor Q1 est relié à l'entrée d'un miroir de courant M1, lui-même relié à la tension VCC. Le miroir M1 comprend deux sorties alimentant les bases de deux transistors NPN Q3 et Q4 disposés en antiparallèle. Les transistors Q3 et Q4 forment l'interrupteur S6 permettant de court-circuiter la résistance R2.

Comme on le verra en relation avec la figure 6, ce circuit permet pratiquement d'annuler la variation de la tension V- à la fin de la phase 5 décrite en relation avec la figure 3.

La figure 5 représente un mode de réalisation de l'ensemble du comparateur 20, de la source I4 et de l'interrupteur S8. La capacité C2 est chargée par la source de courant I3 et éventuellement en outre par la sortie d'un miroir de courant M2 relié à la tension VCC. Un transistor NPN Q5 est disposé en série entre la source de courant commandée I2 et l'entrée du miroir M2. Ce transistor Q5 reçoit sur sa base la somme de la tension Vsat précédemment mentionnée et d'une tension Vbe égale à la tension de la jonction base-émetteur du transistor Q5. Avec cette disposition, lorsque la tension aux bornes de la source I2 est inférieure à Vsat, c'est-à-dire lorsque la source I2 est saturée, le transistor Q5 est passant et la différence entre le courant fourni par la source I2 et le courant I₁₀ est fournie à l'entrée du miroir M2. Ce courant d'entrée est éventuellement multiplié par un facteur K dans le miroir M2 et fourni à la capacité C2. Lorsque la source I2 n'est pas saturée, le transistor Q5 est bloqué et la capacité C2 n'est chargée que par la source I3.

La figure 6 représente les allures de divers signaux du circuit de la figure 4 dans une situation identique à celle de la figure 3. On retrouve dans cette figure de mêmes courbes, instants et phases, désignés par des mêmes références qu'à la figure 3.

L'écriture d'une valeur 1 ou O sur la bande, se produisant entre les instants t0 et t4, est effectuée de manière identique à celle décrite en relation avec la figure 3. Par conséquent, on retrouve la même phase 1 d'écriture d'une valeur haute sur la bande et la même phase 2 d'écriture d'une valeur basse.

A l'instant t4 on décide de charger la capacité C2 pour générer une rampe permettant grâce à la source commandée I2 de progressivement décharger le courant de la tête de lecture. L'interrupteur S5 est ouvert et l'interrupteur S4 est fermé. La source de courant I2 sature car elle est prévue pour avoir une valeur initiale I2max supérieure, en valeur absolue, à la valeur I1 du courant présent à l'instant t4 dans la tête 10. Cette saturation est détectée par le comparateur 20 qui ferme l'interrupteur S8 mettant en parallèle la source de valeur importante I4 sur la source I3. Ainsi, la tension aux bornes de la capacité C2 croît très rapidement. Corrélativement, le courant fourni théoriquement par la source I2 décroît pour atteindre rapidement le courant I1 à l'instant t5. Alors, la source I2 n'est plus saturée, ce qui est détecté par le comparateur 20 qui ouvre l'interrupteur S8. La capacité C2 se charge alors normalement grâce à la source I3 pendant la phase 4 qui est identique à la phase 4 de la figure 3.

Ainsi, la phase de latence 3 est considérablement réduite et elle est d'autant plus courte que le courant de la source I4 est important par rapport à celui de la source I3.

A l'instant t6, la source de courant I5 de l'étage différentiel Q1, Q2 est activée. L'étage Q1, Q2 est alors saturé car la tension de base V2 du transistor Q1 est suffisamment supérieure à la tension de base VC2 du transistor Q2. Le transistor Q1 dérive la totalité du courant de la source I5. Le courant du transistor Q1 est recopié dans les bases des transistors Q3 et Q4 formant l'interrupteur S6. L'un de ces transistors Q3, Q4, en fonction des polarités des tensions V- et H, sature et court-circuite la résistance R2. On obtient un début de phase 5 de stabilisation identique à la phase 5 de la figure 3.

Lorsque la tension VC2 s'approche de la tension V2, l'étage différentiel Q1, Q2 entre en régime linéaire. Au fur et à mesure que la tension VC2 continue à croître, le courant dans le transistor Q1 diminue alors que le courant dans le transistor Q2 augmente. Ainsi, le courant fourni aux bases des transistors Q3, Q4 de l'interrupteur S6 diminue, et ces transistors se bloquent progressivement. Les transistors Q3, Q3, sont définitivement bloqués lorsque la tension VC2 atteint une valeur suffisamment grande par rapport à V2. Alors, l'étage différentiel Q1, Q2 sature et le transistor Q2 dérive tout le courant de la source I5.

Ainsi, on réalise une commutation progressive de la résistance R2 d'une valeur faible vers sa valeur forte initiale, ce qui laisse le temps à la boucle de régulation de tension de repos de compenser la charge de la capacité C1 par le courant de polarisation i. Comme cela est représenté, autour de l'instant t7 de cette commutation progressive, on ne remarque pratiquement aucune variation de la tension V-. Cela signifie que le prochain front montant du signal C peut survenir juste après l'instant t7.

Ainsi on peut combiner la réduction de la phase de latence 3 et la commutation douce à l'instant t7, ce qui permet une réduction considérable du temps nécessaire à la commutation du mode écriture vers le mode lecture de la tête 10.

Comme dans le cas du circuit de la figure 3, la sortie de l'amplificateur 12 est validée lorsque la tension VC2 atteint la valeur seuil V3. Le signal E5 de commande de la source I5, comme cela a été indiqué, est activé à l'instant t6. Il pourra être désactivé lorsque le transistor Q2 dérive tout le courant de la source I5, par exemple, à l'instant t8 où on valide la sortie du comparateur 14.

Les signaux S1 à S5 et S7 sont ceux qui sont classiquement fournis par le circuit de commande 18 de la figure 2. L'homme du métier saura réaliser un circuit fournissant un signal de validation E5 convenable, par exemple grâce à un interrupteur disposé en série avec la source I5 et commandé par un comparateur à fenêtre ayant des valeurs seuil V1 et V3. La source I5 pourrait être active en permanence, ce qui entraînerait la fermeture de l'interrupteur S6 à partir de l'instant t2. Ceci perturberait la sortie H de l'amplificateur 12, ce qui est sans importance car on ne tient pas compte de cette sortie entre les instants t2 et t8.

## Revendications

1. Dispositif de commutation d'un mode écriture à un mode lecture d'une tête de lecture (10) reliée entre des première (A) et deuxième (B) bornes d'entrée d'un amplificateur différentiel (12), la deuxième borne d'entrée étant reliée à un potentiel constant par l'intermédiaire d'une capacité (C1) et à la sortie de l'amplificateur par l'intermédiaire d'une résistance (R2), comprenant :
des moyens (C2, I3, S5) de génération d'une rampe de tension, actifs après une écriture ;
des moyens (I2, S4, 16) de décharge du courant de la tête de lecture proportionnellement à ladite rampe entre le début (t4) de la rampe et un premier seuil (V1) de la rampe ; et
des moyens (S6) de commutation de ladite résistance à une valeur basse, au moins entre le premier seuil et un deuxième seuil (V2) de la rampe ;
caractérisé en ce qu'il comprend des moyens de détection (Q1, Q2) du deuxième seuil assurant, au voisinage de ce seuil, une commande progressive desdits moyens de commutation.

2. Dispositif selon la revendication 1, caractérisé en ce que les moyens de commutation comprennent deux transistors de commutation (Q3, Q4) de même type disposés en parallèle sur ladite résistance (R2) et en opposition l'un par rapport à l'autre.

3. Dispositif selon la revendication 2, caractérisé en ce que les moyens de détection du deuxième seuil (V2) comprennent deux transistors (Q1, Q2) montés en étage différentiel dont une entrée reçoit une tension égale au deuxième seuil (V2) et l'autre entrée reçoit ladite rampe, des moyens (M1) étant prévus pour fournir aux bases des transistors de commutation (Q3, Q4) un courant proportionnel au courant circulant dans l'un ou l'autre des transistors de l'étage différentiel.

4. Dispositif selon la revendication 3, caractérisé en ce qu'il comprend un miroir de courant (M1) disposé pour copier dans les bases des transistors de commutation (Q3, Q4) le courant circulant dans l'un ou l'autre des transistors de l'étage différentiel.

## Patentansprüche

1. Einrichtung zur Umschaltung eines zwischen einem ersten (A) und einem zweiten (B) Eingangsanschluß eines Differentialverstärkers (12) liegenden Lese- bzw. Wiedergabekopfes (10) aus einem Schreib- in einen Lesemodus, wobei der zweite Eingangsanschluß über eine Kapazität (C1) mit einem konstanten Potential und über einen Widerstand (R2) mit dem Ausgang des Verstärkers verbunden ist, und wobei die Einrichtung umfaßt:
- nach einem Schreibvorgang aktive Mittel (C2, I3, S5) zur Erzeugung einer Spannungsrampe;
- Mittel (I2, S4, 16) zur Entladung des Stroms aus dem Lesekopf proportional zur genannten Rampe zwischen dem Beginn (t4) der Rampe und einem ersten Schwellwert (V1) der Rampe; sowie
- Mittel (S6) zur Umschaltung des genannten Widerstands auf einen niedrigen Wert, wenigstens zwischen dem ersten Schwellwert und einem zweiten Schwellwert (V2) der Rampe;
dadurch gekennzeichnet, daß
die Einrichtung Detektionsmittel (Q1, Q2) zum Nachweis des zweiten Schwellwerts aufweist um in der Nachbarschaft um diesen Schwellwert eine progressive Steuerung der genannten Umschaltmittel zu gewährleisten.

2. Einrichtung nach Anspruch 1, dadurch gekennzeichnet, daß die Umschaltmittel zwei Schalt-Transistoren (Q3, Q4) vom gleichen Typ umfassen, die parallel zu dem genannten Widerstand (R2) und entgegengesetzt zueinander angeordnet sind.

3. Einrichtung nach Anspruch 2, dadurch gekennzeichnet, daß die Detektionsmittel zum Nachweis des zweiten Schwellwerts (V2) zwei als Differenzstufe geschaltete Transistoren (Q1, Q2) aufweisen, die an ihrem einen Eingang eine Spannung gleich dem zweiten Schwellwert (V2) und an ihrem anderen Eingang die genannte Rampenspannung zugeführt erhält, wobei Mittel (M1) vorgesehen sind, um den Basisanschlüssen der Schalt-Transistoren (Q3, Q4) einen Strom zuzuführen, der proportional dem in dem einen oder in dem anderen Transistor der Differenzstufe fließenden Strom ist.

4. Einrichtung nach Anspruch 3, dadurch gekennzeichnet, daß sie einen Stromspiegel (M1) in solcher Anordnung umfaßt, daß er in den Basisanschlüssen der Schalt-Transistoren (Q3, Q4) den in dem einen oder in dem anderen der Transistoren der Differenzstufe fließenden Strom reproduziert.

## Claims

1. A device for switching a read head (10) from a write mode to a read mode, the read head being connected between first (A) and second (B) input terminals of a differential amplifier (12), the second input terminal being connected to a constant voltage through a capacitor (C1) and to the amplifier output through a resistor (R2), including:
means (C2, I3, S5) for generating a voltage ramp, that are active after a write operation;
means (I2, S4, 16) for discharging the current of the read head proportionally to said ramp between the beginning (t4) of the ramp and a first threshold (V1) of the ramp; and
switching means (S6) for switching said resistor to a low value, at least between the first threshold (V1) and a second ramp threshold (V2);
characterised in that it includes means (Q1, Q2) for detecting the second threshold providing, at the vicinity of said threshold, a progressive control of the switching means.

2. The device of claim 1, characterised in that said switching means include two switching transistors (Q3, Q4) of the same type disposed in parallel with said resistor (R2) and in opposite direction one with respect to the other.

3. The device of claim 2, characterised in that said means for detecting the second threshold (V2) include two transistors (Q1, Q2) connected as a differential stage, an input of which receives a voltage equal to said second threshold (V2) and the second input receives said ramp, means (M1) being provided to supply to the bases of said switching transistors (Q3, Q4) a current proportional to the current flowing in either one of said differential stage transistors.

4. The device of claim 3, characterised in that it includes a current mirror (M1) disposed so as to duplicate in the bases of said switching transistors (Q3, Q4) the current flowing in either one of the differential stage transistors.
